# FASCICULE DE BREVET EUROPEEN

(11) **EP 0 632 305 B1**
(45) Date de publication et mention de la délivrance du brevet: **17.12.1997**
(21) Numéro de dépôt: 94108497.2
(22) Date de dépôt: 02.06.1994
(51) Int. Cl.: G02C 5/22

(54) **Charnière pour lunettes**
Brillenscharnier
Hinge for spectacles

(30) Priorité: 09.06.1993 CH 1731/93
(43) Date de publication de la demande: 04.01.1995
(73) Titulaire: LN INDUSTRIES S.A., 1211 Genève 8 (CH)
(72) Inventeur: Gerbet, André, F-39300 Champagnole (FR)
(74) Mandataire: ARDIN & CIE S.A.

(56) Documents cités:
- EP-A- 0 522 594
- FR-A- 2 262 317
- GB-A- 2 199 155
- US-A- 3 422 449
- US-A- 4 790 645
- PATENT ABSTRACTS OF JAPAN vol. 13, no. 91 (P-837) 3 Mars 1989 & JP-A-63 273 831

## Description

La présente invention concerne une charnière pour lunettes, comprenant deux parties articulées l'une à l'autre, une première de ces parties étant destinée à être fixée à la partie face de la monture de lunettes et la seconde de ces parties étant reliée à la branche de lunettes de façon coulissante suivant une direction longitudinale de déplacement contre l'effet d'une force de rappel, la charnière comportant un dispositif destiné à solliciter la branche de lunettes dans au moins une position prédéterminée par rapport à la face, ce dispositif comportant au moins un premier aimant permanent solidaire de la branche de lunettes et au moins un second aimant permanent solidaire de la seconde partie et coopérant de façon telle avec le premier aimant permanent que la branche de lunettes soit sollicitée par ladite force de rappel suivant la direction de déplacement vers ladite première partie.

Le document JP-A-63-273831 décrit une charnière de ce type qui comprend un premier aimant permanent fixé par l'intermédiaire d'une pièce en L à la branche de lunettes et un second aimant permanent fixé au second charnon de la charnière. Les deux aimants permanents sont arrangés l'un à la suite de l'autre par rapport à la direction de déplacement, de façon que la distance entre les aimants augmente lorsqu'on tire sur la branche.

On connaît encore du document EP-A-522 594 une monture de lunettes comportant une charnière dont les deux charnons sont munis d'aimants permanents de polarités attractives de façon à solliciter la branche de lunettes dans la position ouverte.

Les charnières décrites dans les documents US-A-4 832 479, EP-A-0 201 455, EP-A-0 306 446, EP-A-0 340 161, EP-A-0 378 969, EP-A-0 462 936 comprennent des dispositifs présentant généralement au moins un ressort qui sollicite la branche de lunettes vers au moins une position qui est la position ouverte d'utilisation des lunettes. Le dispositif peut bien entendu également être prévu pour retenir la branche dans sa position repliée. Les ressorts utilisés sont sujet à une fatigue menant à leur rupture, ce qui nécessite des réparations ou le remplacement des lunettes.

La présente invention a pour but de trouver une alternative aux charnières à ressort et à améliorer le fonctionnement de la charnière à dispositif magnétique du document japonais précité.

La charnière conformément à la présente invention est caractérisée, à cet effet, par le fait que chacun des premier et second aimants permanents comporte une succession alternée d'aimantations positives et négatives arrangées les unes à la suite des autres parallèlement à ladite direction de déplacement, ces successions alternées des premier et second aimants permanents étant disposés sensiblement parallèlement les unes aux autres et le tout étant conformé de façon que la branche de lunettes soit sollicitée vers les positions ouverte et repliée de la branche de lunette par coulissement du ou des seconds aimants permanents le long du ou des premiers aimants.

Par ces caractéristiques, on obtient une force de rappel magnétique élevée tout en réduisant considérablement l'encombrement général de la charnière avec son dispositif de rappel.

Le fonctionnement par coulissement longitudinal des aimants les uns par rapport aux autres et par champ magnétique glissant permet une grande fiabilité et sécurité d'utilisation.

D'autres avantages ressortent des caractéristiques exprimées dans les revendications dépendantes et de la description exposant ci-après l'invention, ainsi que des exécutions alternatives, plus en détails à l'aide de dessins qui représentent schématiquement et à titre d'exemple plusieurs modes d'exécution et variantes.

La figure 1 est une vue latérale en coupe partielle d'un premier mode d'exécution.

Les figures 2 à 4 illustrent des vues latérales de trois variantes en coupe partielle.

La figure 5 est une vue en coupe partielle parallèle à la vis de charnière d'une quatrième variante, laquelle est conforme à l'objet des revendications.

La figure 6 représente une vue latérale en coupe partielle d'une cinquième variante.

Les figures 7 et 8 représentent un deuxième et troisième mode d'exécution.

Les figures 9a et b illustrent un quatrième mode d'exécution suivant une vue latérale et une vue en plan.

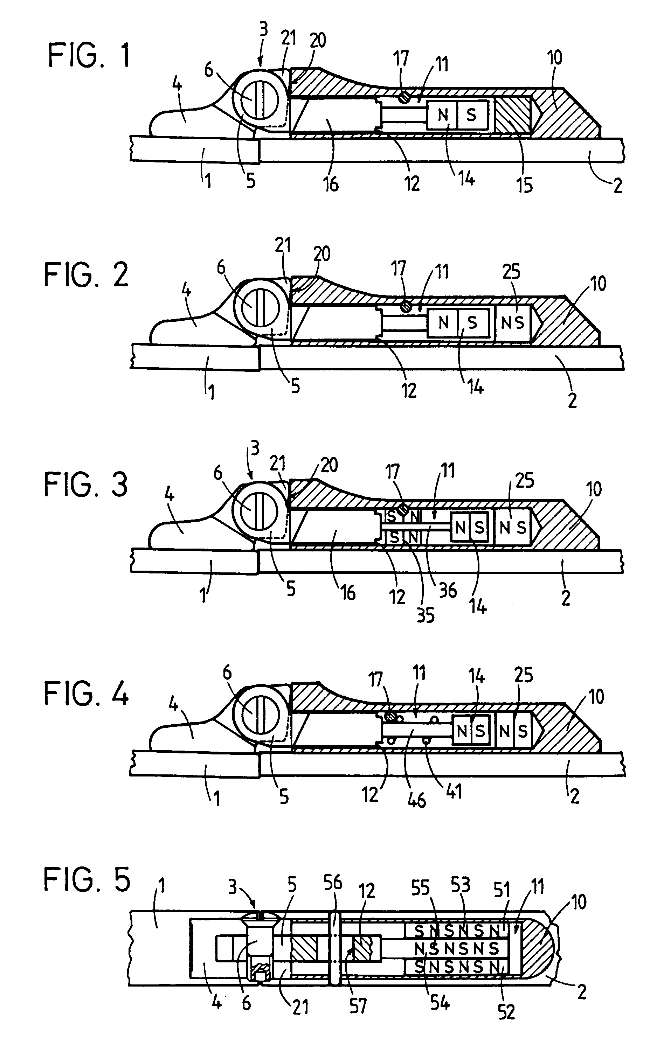

La forme d'exécution décrite en référence à la figure 1 comprend une partie face 1 d'une monture de lunettes et une branche de lunettes 2 articulées l'une à l'autre grâce à une charnière 3. Cette dernière présente un premier charnon 4 solidaire de la partie face 1 et un second charnon 5 relié à la branche de lunettes 2. Une vis de charnière 6 traverse les deux charnons 4 et 5.

La branche 2 comprend un boîtier 10 présentant un logement 11. Le second charnon 5 est muni d'un prolongement 12 logé de façon coulissante dans ce logement 11. Le prolongement 12 comprend à son extrémité libre un fort aimant permanent 14 représenté par les pôles N-S. Cet aimant permanent est attiré par une pièce 15 en fer ou en acier fixé par collage au fond du logement 11. Le prolongement 12 comprend encore une pièce de guidage 16 d'une section faiblement inférieure à la section du logement 11, de façon à assurer un coulissement sans jeu du prolongement 12 dans le logement 11. Le prolongement est retenu dans le logement 11 par une goupille 17 traversant la paroi du logement 11. Le boîtier 10 présente une face frontale 20 sensiblement perpendiculaire à son axe et destinée à coopérer avec une came 21 faisant partie du premier charnon 4. Ainsi, l'aimant permanent 14 attire fortement la branche de lunettes 2 vers la came 21 du charnon 4 pour déterminer une position d'ouverture, telle que représentée à la figure 1, et une position de fermeture de la branche. Il est bien entendu que la partie face 1 et la branche de lunettes 2 sont en un matériau non ferro- ou paramagnétique, de préférence en un polymère synthétique.

Le ressort des charnières élastiques classiques, tel que décrit par exemple dans les documents cités ci-dessus, est remplacé par un aimant permanent, avec l'avantage que l'attraction magnétique est maximum, lorsque l'entrefer est minimum, donc dans les positions ouverte et repliée de la branche, au contraire d'un ressort dont la force augmente avec l'étirement.

Dans les figures suivantes, les éléments identiques portent les mêmes signes de référence. La variante d'exécution décrite en référence à la figure 2 est identique à la charnière de la figure 1 mise à part que la pièce 15 en fer ou en acier est remplacée par un aimant permanent fixe 25 d'une polarité attractive, identique à la polarité de l'aimant 14 porté par le prolongement 12. La force d'attraction et l'effet élastique de la charnière sont donc encore améliorés.

La variante illustrée à la figure 3 diffère de celle de la figure 2 uniquement par le fait que la charnière comporte en outre un troisième aimant permanent 35 logé dans le logement 11 sur le côté opposé de l'aimant permanent 25 par rapport à l'aimant permanent 14 et rendu solidaire des parois du logement 11 par la goupille 17. Ce troisième aimant permanent 35 comporte un alésage central destiné au passage d'une tige 36 du prolongement 12 reliant la pièce de guidage 16 à l'aimant permanent 14.

Le troisième aimant permanent 35 est de polarité antagoniste ou inverse par rapport à celle de l'aimant permanent mobile 14 et renforce ainsi l'effet élastique de la charnière. Considérant que la force répulsive entre les deux aimants 14 et 25 augmente avec la diminution de leur entrefer, on obtient, en additionant les effets des trois aimants permanents, une force sollicitant le prolongement 12 vers le fond du logement 11 relativement constante pour des positions médianes de l'aimant permanent mobile 14 entre les deux aimants permanents fixés 25 et 35.

A la figure 4, on a représenté une variante qui est similaire à celle de la figure 2 avec un aimant permanent fixe 25 et un aimant permanent mobile 14 sollicitant le prolongement 12 vers le fond du logement 11. Cette variante comprend en outre un ressort à boudin 41 disposé autour de la tige 46 du prolongement 11 et s'appuyant d'une part, sur la goupille 17 solidaire et la paroi du logement 11 et, d'autre part, sur l'aimant permanent 14 pour solliciter ce dernier en direction du fond du logement 11. L'effet élastique est ici obtenu par l'addition de la force d'attraction des aimants permanents 14,25 diminuant avec l'augmentation de l'entrefer et de la force du ressort augmentant linéairement avec le déplacement du prolongement. Cet effet peut donc avec un ressort et des aimants permanents donnés devenir sensiblement constant pour un intervalle de déplacement restreint.

La variante représentée à la figure 5 en coupe partielle parallèlement à l'axe de la charnière comprend, comme le mode d'exécution de la figure 1, une partie face 1 et une branche 2, articulées l'une à l'autre par la charnière 3 avec la vis 6 traversant le charnon 4 et le charnon 5 relié à la branche 2. La branche 2 comprend également un boîtier 10 avec un logement 11. Le charnon 5 est solidaire du prolongement 12 monté de façon coulissante dans le logement 11. Deux plaquettes ferromagnétiques 51, 52 sont fixées par collage sur le côté supérieur et inférieur du logement 11 et comportent une succession alternée d'aimantations 53 positives et négatives. Les aimantations positives 53 de l'une des plaquettes sont situées en regard des aimantations de même polarité de l'autre plaquette.

Le prolongement 12 est muni également d'une plaquette ferromagnétique mobile 54 portant une succession alternée d'aimantations 55. Dans les positions ouverte ou fermée de la branche 2, les aimantations positives des plaquettes 51 et 52 se trouvent en regard des aimantations négatives de la plaquette mobile 54; ainsi la branche 2 est sollicitée vers ces deux positions, étant donné que la face frontale 20 du boîtier 10 coopère avec la came 21 du charnon 4 comme cela a été expliqué en référence à la figure 1. Une goupille 56 traverse le boîtier 10, et le prolongement 12 comporte à cet effet un évidement 57 permettant le passage de la goupille 56 qui délimite ainsi la course du prolongement 12 dans le boîtier 10. L'espacement entre une aimantation 53 positive et négative est inférieur au déplacement provoqué par la came 21, lorsque la branche est déplacée entre les positions ouverte et repliée. Ainsi, à cause de l'attraction considérable entre les aimantations 53 et 55 des plaquettes fixes 51, 52 et mobiles 54, la branche 2 est sollicitée élastiquement vers sa position ouverte et repliée.

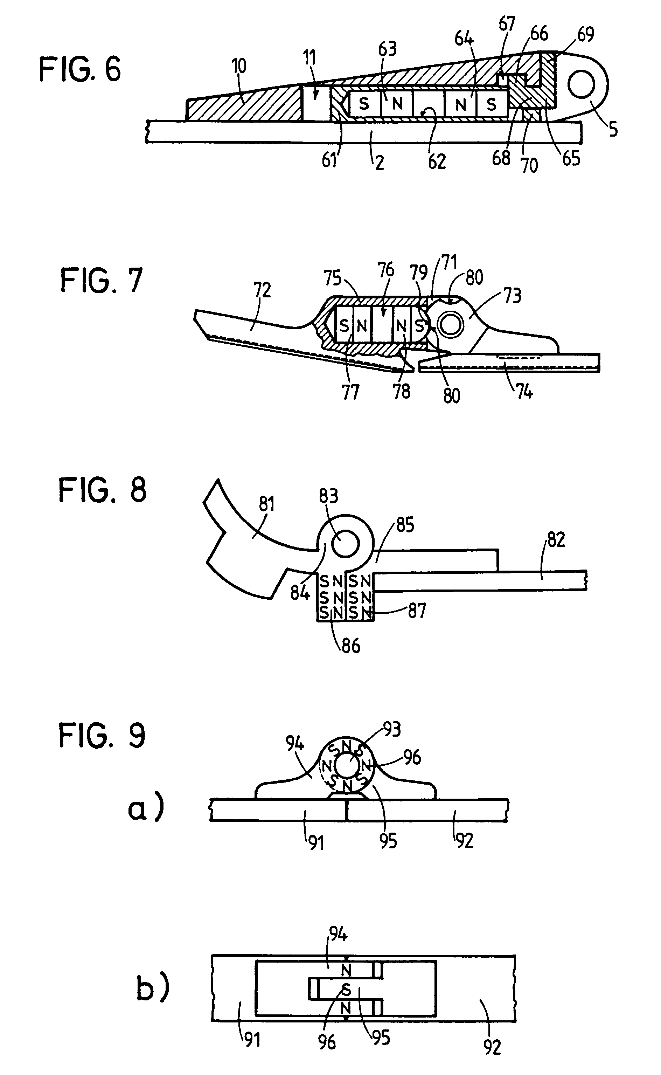

La variante illustrée à la figure 6 est également une charnière élastique similaire à celles décrites en référence aux figures 1 et 2, comprenant une branche 2 avec un boîtier 10 présentant un logement 11, dans lequel est disposé de façon coulissante un prolongement 61 solidaire du charnon 5. Ce prolongement 61 comporte un évidement longitudinal 62 dans lequel sont logés deux aimants permanents 63, 64 de polarité inverse ou antagoniste. L'un 63 de ces aimants permanents s'appuye sur le fond de l'évidement 62 et l'autre 64 est sollicité contre une pièce de verrouillage 65 retenue sur le boîtier 10. Cette pièce de verrouillage 65 présente une première portion transversale 66 s'engageant dans une creusure 67 du boîtier 10, une position médiane 68 et une seconde portion transversale 69 venant s'appliquer contre la face externe du boîtier 10 pour constituer une surface d'appui en métal dur pour la came solidaire du charnon de la partie face de la monture non illustrée.

Une entretoise 70 venue d'une pièce avec le prolongement 61 vient s'engager sous la pièce de verrouillage 65 pour la maintenir dans la position de verrouillage, dans laquelle la première portion transversale 66 est engagée dans la creusure 67. Lorsqu'on désire démonter la branche, il y a lieu de tirer le charnon 5 vers la droite à la figure 6 contre la force répulsive des aimants permanents 63,64. Lorsque l'entretoise 70 est dégagée de la pièce de verrouillage 65, on peut déplacer cette dernière vers le bas à la figure 6 et le prolongement peut être sorti du boîtier 10 de la branche 2. Cette variante offre l'avantage d'un montage et d'un démontage rapide, tout en permettant un fonctionnement fiable et un nombre de composants réduit.

Le mode d'exécution de charnière représenté à la figure 7 comprend un charnon 71 solidaire de la partie face 72 et un charnon 73 solidaire de la branche de lunettes 74. Le charnon 71 comprend un boîtier 75 avec un logement 76 dans lequel sont logés deux aimants permanents 77 et 78 de polarité antagoniste. L'aimant permanent 78 présente une surface 79 sensiblement hémisphérique destinée à coopérer avec deux creusures 80 de forme correspondante prévues sur le charnon opposé 73 pour définir une position ouverte ou repliée de la branche de lunettes 74.

La figure 8 montre un autre mode d'exécution de charnière magnétique simple avec une partie face 81 et une branche de lunettes 82 articulées l'une à l'autre par une charnière 83. Les deux charnons 84,85 de la charnière portent des plaquettes 86, 87 présentant des aimants permanents de polarité égale et attractive pour maintenir la branche de lunettes 82 dans sa position d'ouverture.

Dans un autre mode d'exécution illustré aux figures 9a et 9b, la partie face 91 et la branche 92 sont articulées l'une à l'autre grâce à une charnière 93 ayant deux charnons 94,95 dont les parties sphériques portent quatre aimantations 96 positives et négatives se succédant alternativement. Des positions ouverte et repliée de la branche 92 sont définies par la juxtaposition des polarités attractives des aimantations 96 des deux charnons 94, 95. Ce mode d'exécution présente l'avantage d'une grand simplicité et d'une charnière de taille réduite.

Il est bien entendu que les modes d'exécution et variantes décrits ci-dessus ne présentent aucun caractère limitatif et qu'ils peuvent recevoir toutes modifications désirables à l'intérieur du cadre tel que défini par la revendication 1. Eventuellement, le boîtier 10 pourra être prévu sur la partie face 1 de la monture. Le dispositif à aimant permanent pourra comprendre uniquement un seul aimant permanent fixé sur le boîtier et attirant une pièce en fer ou acier solidaire du prolongement 12.

## Revendications

1. Charnière pour lunettes comprenant deux parties (4,5) articulées l'une à l'autre, une première de ces parties (4) étant destinée à être fixée à la partie face (1) de la monture de lunettes et la seconde (5) de ces parties étant reliée à la branche de lunettes (2) de façon coulissante suivant une direction longitudinale de déplacement contre l'effet d'une force de rappel, la charnière comportant un dispositif destiné à solliciter la branche de lunettes (2) dans au moins une position prédéterminée par rapport à la face (1), ce dispositif comportant au moins un premier aimant permanent (51,52) solidaire de la branche de lunettes (2) et au moins un second aimant permanent (54) solidaire de la seconde partie (5) et coopérant de façon telle avec le premier aimant permanent que la branche de lunettes soit sollicitée par ladite force de rappel suivant la direction de déplacement vers ladite première partie, caractérisée par le fait que chacun des premier et second aimants permanents (51,52,54) comporte une succession alternée d'aimantations (53,55) positives et négatives arrangées les unes à la suite des autres parallèlement à ladite direction de déplacement, ces successions alternées des premier et second aimants permanents étant disposées sensiblement parallèlement les unes aux autres et le tout étant conformé de façon que la branche de lunettes (2) soit sollicitée vers les positions ouverte et repliée de la branche de lunettes (2) par coulissement du ou des seconds aimants permanents (54) le long du ou des premiers aimants (51,52).

2. Charnière selon la revendication 1, caractérisée par le fait que les successions alternées (53,55) sont arrangées de façon que dans les positions ouverte et repliée de la branche de lunettes (2), les aimantations positives du ou des premiers aimants permanents (51,52) se trouvent sensiblement disposées en regard des aimantations négatives du ou des seconds aimants permanents (54) et vice-versa de manière que la branche de lunettes (2) soit sollicitée vers ces deux positions.

3. Charnière selon la revendication 1 ou 2, caractérisée par le fait qu'elle comprend une came (21) solidaire de la première partie (4) et une pièce (10) solidaire de la seconde partie (5) de la charnière, cette pièce (10) étant sollicitée contre la came (21) par la force de rappel magnétique générée par les aimants permanents (51,52,54).

4. Charnière selon la revendication 3, caractérisée par le fait que ladite pièce est constituée par un boîtier (10) solidaire de la branche (2) et comportant un logement (11) dans lequel est disposé de façon coulissante un prolongement (12) de la seconde partie (5), le boîtier (10) comprenant une portion antérieure destinée à coopérer avec ladite came (21), le logement (11) étant muni d'au moins un desdits premiers aimants permanents (51,52) dont la succession alternée d'aimantations (53) est disposée parallèlement en regard de la succession alternée d'aimantations (55) du second aimant permanent (54) prévu sur ledit prolongement (12) de façon telle que le prolongement (12) est sollicité en direction du fond du logement (11).

5. Charnière selon la revendication 3, caractérisée par le fait qu'elle comprend un ressort (41) s'appuyant d'une part sur une partie (17,56) solidaire du boîtier (10) et d'autre part sur le prolongement (12) et agencé de façon à solliciter ce prolongement (12) en direction du fond dudit logement (11).

## Patentansprüche

1. Brillenscharnier mit zwei gelenkig miteinander verbundenen Teilen (4, 5), wobei ein erstes (4) dieser Teile dazu bestimmt ist, an der Vorderseite (1) des Brillengestells befestigt zu werden, und das zweite (5) dieser Teile mit dem Brillenbügel (2) verbunden ist, und zwar gegen die Wirkung einer Riickstellkraft in einer Längsverschiebungsrichtung gleitend, während das Scharnier eine Vorrichtung aufweist, die dazu bestimmt ist, den Brillenbügel (2) in zumindest eine relativ zur Seite (1) vorbestimmte Stellung zu drücken, wobei diese Vorrichtung zumindest einen ersten Dauermagneten (51, 52), der mit dem Brillenbügel (2) fest verbunden ist, sowie zumindest einen zweiten Dauermagneten (54) aufweist, der mit dem zweiten Teil (5) fest verbunden ist und so mit dem ersten Dauermagneten zusammenwirkt, dass der Brillenbügel durch die benannte Rückstellkraft in der Richtung der Verschiebung zu dem benannten ersten Teil hin gedrückt wird, dadurch gekennzeichnet, dass jeder der beiden Dauermagneten (51, 52, 54), der erste und der zweite, je eine Wechselfolge von positiven und negativen Magnetisierungen (53, 55) aufweist, die aufeinanderfolgend parallel zu der benannten Verschiebungsrichtung angeordnet sind, wobei diese Wechselfolgen des ersten und zweiten Dauermagneten im wesentlichen parallel zueinander ausgelegt sind und das Ganze so gestaltet ist, dass der Brillenbügel (2) durch Gleiten des oder der zweiten Dauermagneten (54) entlang des oder der ersten Dauermagneten (51, 52) in die offene bzw. zusammengeklappte Stellung des Brillenbügels (2) gedrückt wird.

2. Scharnier gemäss Anspruch 1, dadurch gekennzeichnet, dass die Wechselfolgen (53, 55) so angeordnet sind, dass in der offenen und in der zusammengeklappten Stellung des Brillenbügels (2) die positiven Magnetisierungen des oder der ersten Dauermagneten (51, 52) sich im wesentlichen gegenüber den negativen Magnetisierungen des oder der zweiten Dauermagneten (54) befinden und umgekehrt, so dass der Brillenbügel (2) in diese beiden Stellungen gedrückt wird.

3. Scharnier gemäss Anspruch 1 oder 2, dadurch gekennzeichnet, dass es einen mit dem ersten Teil (4) fest verbundenen Nocken (21) und ein mit dem zweiten Teil (5) des Scharniers fest verbundenes Teilstück (10) aufweist, wobei dieses Teilstück (10) durch die von den Dauermagneten (51, 52, 54) erzeugte magnetische Rückstellkraft gegen den Nocken (21) gedrückt wird.

4. Scharnier gemäss Anspruch 3, dadurch gekennzeichnet, dass das benannte Teilstück aus einem Gehäuse (10) besteht, das mit dem Bügel (2) fest verbunden ist und ein Lager (11) aufweist, worin ein Verlängerungsstück (12) des zweiten Teiles (5) gleitend angeordnet ist, wobei das Gehäuse (10) einen vorderen Abschnitt hat, der dazu bestimmt ist, mit dem benannten Nocken (21) zusammenzuwirken, während das Lager (11) mit zumindest einem der benannten ersten Dauermagneten (51, 52) ausgerüstet ist, deren Wechselfolge von Magnetisierungen (53) parallel zu und gegenüber der Wechselfolge der Magnetisierungen (55) des zweiten Dauermagneten (54) ausgelegt ist, der so auf dem benannten Verlängerungsstück (12) sitzt, dass das Verlängerungsstück (12) zum Boden des Lagers (11) hin gedrückt wird.

5. Scharnier gemäss Anspruch 3, dadurch gekennzeichnet, dass es eine Feder (41) umfasst, die einerseits auf einem mit dem Gehäuse (10) fest verbundenen Teil (17, 56) und andererseits auf dem Verlängerungsstück (12) ruht und so eingerichtet ist, dass sie dieses Verlängerungsstück (12) zum Boden des benannten Lagers (11) hin drückt.

## Claims

1. A hinge for spectacles comprising two parts (4, 6) connected together rotatably, a first one (4) of the parts being designed for fastening to the face member (1) of the frame of the spectacles and the second (5) of these parts being connected to the temple of the spectacles (2) so as to be capable of a sliding motion in a longitudinal direction against the effect of a return force, the hinge including a device designed for biasing the temple of the spectacles (2) into, at least, one predetermined position relative to the face member (1), this device including at least a first permanent magnet (51, 52) integral with the temple of the spectacles (2) and at least a second permanent magnet (54) integral with the second part (5) and cooperating in such a manner with the first permanent magnet that the temple of the spectacles be biased by said return force along a direction of motion towards said first part, characterized in that each one of the first and second permanent magnets (51, 52, 54) includes an alternating succession of positive and negative magnetizations (53, 54) arranged in succession parallelly to said direction of motion, these successions of alternating first and second permanent magnets being arranged substantially parallelly to each other and the whole arrangement being constructed so that the temple of the spectacles (2) be biased towards the open and folded positions thereof by the sliding of the second permanent magnet(s) (54) along the first permanent magnet(s) (51, 52).

2. A hinge according to claim 1, characterized in that the alternating successions (53, 55) are arranged in such a manner that, in the open position and the folded positions of the temple of the spectacles (2), the positive magnetizations of the first permanent magnet(s) (51, 52) be located substantially opposite the negative magnetizations of the second permanent magnet(s) (54) and vice versa, so that the temple of the spectacles (2) be biased towards these two positions.

3. A hinge according to claim 1 or 2, characterized in that it includes a cam (21) integral with the first part (4) and a piece (10) integral with the second part (5) of the hinge, this piece (10) being biased against the cam (21) by the magnetic return force produced by the permanent magnets (51, 52, 54).

4. A hinge according to claim 3, characterized in that said piece is comprised of a casing (10) integral with the temple (2) and including a housing (11) into which is disposed slidably an extension (12) of the second part (5), the casing (10) including a front portion designed for cooperating with said cam (21), the housing (11) being provided with at least one of said first permanent magnets (51, 52), of which the succession of alternating magnetizations (53) is arranged parallelly opposite the alternating succession of the magnetizations (55) of the second permanent magnet (54) provided on said extension (12) in such a manner that the extension (12) be biased in the direction of the bottom of the housing (11).

5. A hinge according to claim 3, characterized in that it includes a spring (41) which abuts, on the one hand, against a part (17, 56) integral with the casing (10) and, on the other hand, against the extension (12), and which is arranged so as to push the extension (12) in the direction of the bottom of said housing (11).
